# EUROPEAN PATENT SPECIFICATION

(11) **EP 4 663 908 B1**
(45) Date of publication and mention of the grant of the patent: **03.06.2026**
(21) Application number: 24181331.0
(22) Date of filing: 11.06.2024
(51) Int. Cl.: F01P 11/02, B60L 50/70, B60L 1/02, B60L 50/75, B60L 58/33, B60L 58/40, F01P 7/14

(54) **PRESSURE EQUALIZATION TANK FOR A COOLANT SYSTEM OF AN ELECTRICALLY DRIVEN MOTOR VEHICLE**
DRUCKAUSGLEICHSBEHÄLTER FÜR EIN KÜHLSYSTEM EINES ELEKTRISCH ANGETRIEBENEN KRAFTFAHRZEUGS
RÉSERVOIR D'ÉQUILIBRAGE DE PRESSION POUR UN SYSTÈME DE REFROIDISSEMENT D'UN VÉHICULE AUTOMOBILE À PROPULSION ÉLECTRIQUE

(43) Date of publication of application: 17.12.2025
(73) Proprietor: VOLVO TRUCK CORPORATION, 405 08 Göteborg (SE)
(72) Inventor: HULTHÉN, Rikard, 44460 Stora Höga (SE); LOKAT, Adil, 54241 Mariestad (SE); LANTZ, Gustav, 4167 Göteborg (SE); DERMARK, Daniel, 438 36 Landvetter (SE)
(74) Representative: Germain Maureau

(56) References cited:
- CN-A- 103 867 282
- CN-A- 107 968 237
- US-A1- 2003 150 407
- US-B2- 10 669 924

## Description

### TECHNICAL FIELD

The disclosure relates generally to vehicle cooling systems. In particular aspects, the disclosure relates to a pressure equalization tank for a cooling system of an electrically driven motor driven vehicle, a cooling system for an electrically driven motor driven vehicle as well as an electrically driven motor vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Cooling systems with a liquid coolant are used to cool technical devices, such as combustion engines, fuel cells and many other. Often, the coolant is supplied by a coolant source and fed to a heat exchanger in contact with the respective device so that the coolant absorbs heat. The coolant is then returned to the coolant source after passing through a suitable heat dissipation device. Due to the expansion of the coolant when it is heated, pressure and volume changes are to be expected, which must be compensated for in a closed cooling circuit. This can be achieved, for example, by a pressure equalization tank arranged in the cooling circuit.

Known pressure equalization tanks comprise generally a container with a membrane. A part of the volume of the tank is filled with gas, which extends up to the membrane. On the other side of the membrane the liquid coolant is arranged. The gas ensures a defined minimal pressure in the cooling system and the pressure equalization tank makes it easy to compensate for volume changes. However, when the pressure applied on the membrane is too high, there is a risk that the membrane cracks, thus creating a flooding issue in the cooling system. Furthermore, the membrane being generally made in a rubber material, the membrane may resist to movement, thus leading to a not linear pressure regulation curve for the membrane.

In other known cooling systems, the pressure inside the pressure equalization tank is regulated through an active pressure control unit. The control unit can control the pressure in the tank by comparing a specified desired value with a detected actual value. If a difference is determined, a manipulated variable is to be set, which is intended to counteract a deviation. However, this solution requires a large pressure equalization tank, which is to be avoided especially in compact designs. Cooling systems comprising a pressure equalization tank according to the preamble of claim 1 are known from US 2003/150407 A1,
US 10 669 924 B2, CN 103 867 282 A and CN 107 968 237 A.

### SUMMARY

It is thus an object of the invention to propose an alternate pressure equalization tank, which is particularly useful for a fuel cell cooling system in an electrically driven motor vehicle, wherein the maximum pressure can be limited without risk of flooding issue in the cooling system and wherein the pressure equalization tank comprises a small size and a low weight.

According to a first aspect of the invention, the disclosure relates to a pressure equalization tank for a coolant system of an electrically driven motor vehicle, comprising:
- a first partial volume filled with pressurized gas,
- a second partial volume filled with a coolant,
- an electronically controlled valve operable to release pressurized gas from the pressure equalization tank when the coolant pressure exceeds a threshold value,
characterized in that the electronically controlled valve is a turbo control valve.

The first aspect of the disclosure may seek to provide a pressure equalization tank that maintain a desired pressure level therein. A technical benefit includes the use of an electronically controlled valve that avoids the use of a membrane to separate a pressurized gas reservoir from a coolant reservoir and the use of sensors to control the pressure inside the tank.

Optionally in some examples, including in at least one preferred example, the pressure equalization tank further comprises a gas port for receiving pressurized gas, the gas port opening to the first partial volume.

Optionally in some examples, including in at least one preferred example, the pressure equalization tank further comprises a coolant port for supplying coolant to the cooling system, the cooling port opening to the second partial volume.

Optionally in some examples, including in at least one preferred example, the pressure equalization tank further comprises a tight cap arranged at its top side.

According to a second aspect of the invention, the disclosure relates to a system for an electrically driven motor vehicle according to claim 5. line.

Optionally in some examples, including in at least one preferred example, the cooling system further comprises a second radiator, the coolant circuit carrying a coolant between the fuel cell system and the second radiator.

Optionally in some examples, including in at least one preferred example, the system further comprises deaeration lines connecting the coolant circuit to the degassing system.

Optionally in some examples, including in at least one preferred example, the degassing system is a swirl pot.

Optionally in some examples, including in at least one preferred example, the pressure equalization tank is located vertically above the fuel cell system.

According to a third aspect of the disclosure, the disclosure relates to an electrically driven motor vehicle comprising the system as above defined.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a side view of a vehicle comprising a cooling system according to an example embodiment of the present disclosure.
**FIG. 2** schematically illustrates parts of a vehicle system comprising a cooling system according to an example embodiment of the present disclosure, in which the cooling system can be incorporated in the vehicle illustrated in FIG. 1.

### DETAILED DESCRIPTION

The detailed description set forth below provides information and examples of the disclosed technology with sufficient detail to enable those skilled in the art to practice the disclosure.

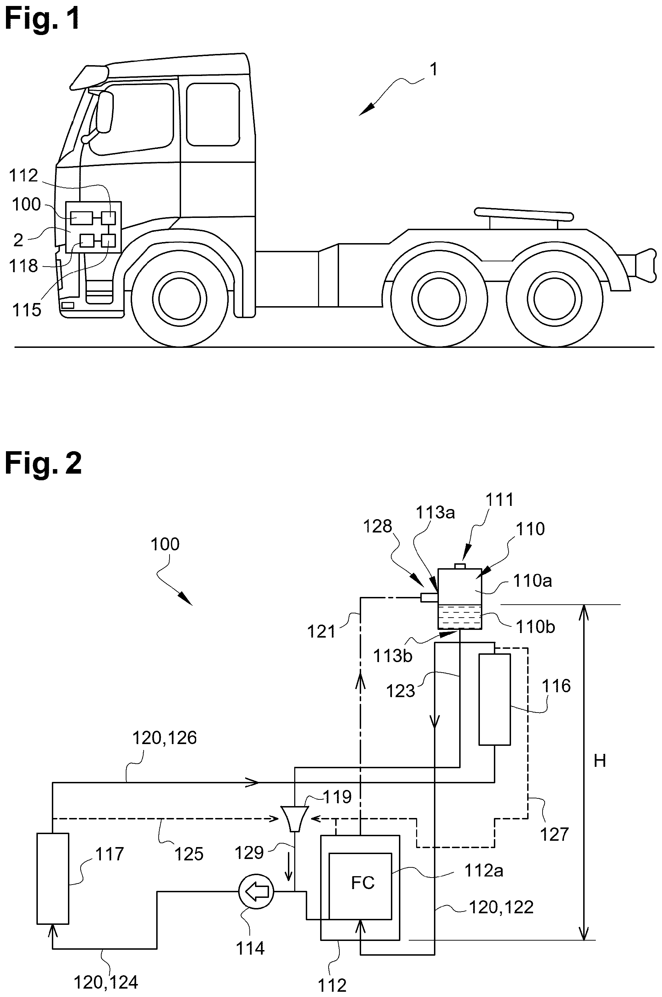

With particular reference to FIG. 1, there is provided a vehicle 1 in the form of a fuel cell electric vehicle (FCEV) comprising a power/energy supply unit in the form of a fuel cell system 112 and a cooling system 100 in fluid communication with the fuel cell system 112. The cooling system 100 and the fuel cell system 112 are integral parts of a vehicle system 2. In the following FIG. 2, a cooling system 100 will be described. The vehicle 1 depicted in FIG. 1 is a truck for which the system 2, the cooling system 100 and the fuel cell system 112, which will be described in detail below, is particularly suitable for.

The fuel cell system 112 comprises a fuel cell stack that is configured and arranged to generate electricity to propel the vehicle 1 and, optionally, to power auxiliary equipment. In the FCEV 1, hydrogen fuel is consumed in the fuel cell stack of the fuel cell system 112 to produce electricity, with water (or water vapor) and heat as the major byproducts. The FCEV 1 illustrated in FIG. 1 may be configured in a series hybrid design where the fuel cell system 112 is paired with a battery system 118. The battery system is here a high voltage battery system 118.

Besides the fuel cell system 112, the FCEV 1 generally comprises an electric powertrain having one or more electric machines 115 connected to the fuel cell system 112 and the battery system 118. The electric machine 115 is a drive unit of the vehicle, while the fuel cell system 112 is the energy provider to the electric machine. Traction power to the vehicle is thus delivered by the battery system 118, the fuel cell system 112 and the electric machine 115. By way of example, the battery system 118 is connected via converters to the electric machine 115 that moves the vehicle, while the fuel cell system 112 supplies energy to the electric machine 115 and/or delivers power to the battery system 118. In other words, a typical FCEV may also use traction batteries or capacitors, inverters, and electric motors for providing traction power to the vehicle. The FCEV 1 may also include other components as is commonly known in the field of fuel cell systems. The fuel cell system 112 may also include auxiliary components and systems such as valving, compressor, air filter, control circuitry, etc. In current solutions to the above problem, the fuel cell system 112 may consequently be provided with a built-in pressure control system including one or more compressors adapted to supply compressed air to a turbine.

The cooling system 100 is described in more detail below with reference to FIG. 2. Turning now to FIG. 2, there is depicted an example of the cooling system 100. As illustrated in FIG. 2, the cooling system 100 comprising a coolant circuit 120. The coolant circuit 120 is arranged and configured to contain a coolant. The coolant circuit 120 is thus configured to define a fluid passageway for circulating the coolant therethrough. The circulation of coolant is made possible by one pump unit 114. The pump unit 114 may advantageously be arranged to control the flow rate and pressure of the coolant in the coolant circuit 120 in response of a control signal from a control unit (not shown). In an exemplary embodiment, the coolant may be pressurized using the pump unit 114.

In addition, the cooling system 100 comprises radiators 116, 117 that are arranged in fluid communication with the coolant circuit 120. The radiators 116, 117 are adapted to at least transfer thermal energy from one fluid medium to another fluid medium for the purpose of cooling the coolant supplied to it. The radiators 116, 117 should be dimensioned in view of the desired function for the specific vehicle as well as the available space and installation in the vehicle. The radiators 116, 117 can be provided in several different ways and are commercially available in various configurations.

As illustrated in FIG. 2, the coolant circuit 120 comprises a first coolant branch 122 downstream to the first radiator 116 for circulating coolant to regulate a temperature of a fuel cell stack 112a of the fuel cell system 112. Indeed, the fuel cell stack 112a is a component that is more sensitive to high temperatures, and thus needs to be protected from high temperatures.

By the arrangement of the first radiator 116 in fluid communication with the first coolant fluid branch 122, the radiator 116 is configured to reduce the temperature of a portion of the coolant to a reduced temperature before it is supplied to the fuel cell system 112 via the first coolant fluid branch 122.

The coolant circuit 120 further comprises a second coolant branch 124 downstream to the fuel cell system 112 for circulating coolant to the second radiator 117. The temperature of the coolant in the second coolant branch 124 is higher than in the first coolant branch 122 due to the heat extracted from the fuel cell stack 112a.

By the arrangement of the second radiator 117 in fluid communication with the second coolant branch 124, the radiator 117 is configured to reduce the temperature of a portion of the coolant to a reduced temperature before it is supplied to the first radiator 116 via a third coolant branch 126.

As illustrated in FIG. 2, the cooling system 100 further comprises a pressure equalization tank 110. The pressure equalization tank 110 is adapted to store coolant and arranged to supply coolant to the fuel cell system 112. It is thus capable of coping with the volume changes due to temperature changes, while the risk for too high pressures in the fuel cell is eliminated. In the embodiment shown, the pressure equalization tank 110 is located vertically above the fuel cell system 112.

The pressure equalization tank 110 is a container closed at its top side by a tight cap 111, the container comprising a first partial volume 110a filled with pressurized gas and a second partial volume 110b filled with a coolant, the first partial volume 110a being disposed above the second partial volume 110b and adjacent thereto. Thus, the pressure applied on the coolant inside the pressure equalization tank 110 mainly depends on the volume of pressurized gas in the first partial volume 110a, and, in a limited way, on the height H between the pressure equalization tank 110 and the fuel cell stack 112.

The pressure equalization tank 110 comprises a gas port 113a opening to the first partial volume for receiving pressurized gas, the gas port 113a being in fluid communication with the fuel cell system 112 via a pressurized gas line 121. The fuel cell system 112 is adapted to supply pressurized gas through one or more compressors.

To prevent that the coolant pressure inside the pressure equalization tank 110 exceeds a threshold value, above which flooding issues in the cooling system may occur, the pressure equalization tank 110 further includes an electronically controlled valve 128 disposed at the gas port 113a and coupled to the pressurized gas line 121. The electronically controlled valve 128 is adapted to release air from the tank when the coolant pressure exceeds a threshold value.

The pressure equalization tank 110 also comprises a coolant port 113b opening to the second partial volume for supplying coolant to the cooling system 100, the coolant port 113b being in fluid communication with the cooling system 110 via a coolant line 123. The coolant line 113b is coupled to a degassing system 119 that is adapted to remove gas from the coolant. In a preferred embodiment of the invention, the degassing system 119 may be a swirl pot. The degassing system 119 may also receive coolant flowing in the third coolant branch 126 of the coolant circuit 120 via a deaeration line 125 and coolant flowing in the first coolant branch 122 of the coolant circuit 120 via a deaeration line 127. The degassed coolant returns to the coolant circuit 120 via a deaeration line 129 that is connected at one end to the degassing system 119 and at another end to the second coolant branch 124 of the coolant circuit 120.

The coolant, in the example embodiment described herein, is a liquid fluid medium. Accordingly, the term "fluid" in the context of these example embodiments refers to a liquid fluid. The type of coolant may, however, vary depending on type of vehicle and type of installation. Typically, the coolant is water-based. By way of example, the coolant is water-based with the addition of glycols to prevent freezing and other additives to limit corrosion, erosion and cavitation etc. The liquid coolant may accordingly be water blended with ethylene glycol, ammonia, or any other suitable liquid coolant. The coolant may also be an oil, or a combination of oil and a water-based fluid. In another example, the coolant may be a fluid such as a gas.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

It should be noted that in the context of the example embodiment, the terms "downstream" and "upstream", as used herein, are terms that indicate a direction relative to the flow of the coolant through the coolant circuit 120. As such, the term "downstream" refers to a direction that generally corresponds to the direction of the flow of coolant, and the term "upstream" generally refers to the direction that is opposite of the direction of flow of the coolant. Therefore, in the embodiment of FIG. 2, a "downstream" direction is a direction from the first radiator 116 to the fuel cell system 112, and a direction from the fuel cell system 112 to the second radiator 117, as indicated by the arrows in FIG. 2.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A pressure equalization tank (110) for a coolant system (100) of an electrically driven motor vehicle (1), comprising:
- a first partial volume (110a) filled with pressurized gas,
- a second partial volume (110b) filled with a coolant,
- an electronically controlled valve (128) operable to release pressurized gas from the pressure equalization tank (110) when the coolant pressure exceeds a threshold value, **characterized in that** the electronically controlled valve (128) is a turbo control valve.

2. The pressure equalization tank (110) of claim 1, further comprising a gas port (113a) for receiving pressurized gas, the gas port (113a) opening to the first partial volume (110a).

3. The pressure equalization tank (110) of any of claims 1-2, further comprising a coolant port (113b) for supplying coolant to the cooling system (100), the coolant port (113b) opening to the second partial volume (110b).

4. The pressure equalization tank (110) of any of claims 1-3, further comprising a tight cap (111) arranged at its top side.

5. A system (2) for an electrically driven motor vehicle (1), comprising a fuel cell system (112) and a cooling system (100) comprising:
- a first radiator (116),
- a coolant circuit (120) for carrying a coolant between the fuel cell system (112) and the first radiator (116),
- a degassing system (119) coupled to the coolant circuit (120), the degassing system (119) being adapted to remove gas from the coolant,
- a pressure equalization tank (110) according to any of the preceding claims, the pressure equalization tank (110) being coupled to the fuel cell system (112) via a pressurized gas line (121) and to the degassing system (119) via a coolant line (123).

6. The system (2) of claim 5, wherein the cooling system (100) further comprises a second radiator (117), the coolant circuit (120) carrying a coolant between the fuel cell system (112) and the second radiator (117).

7. The system (2) of claim 6, further comprising deaeration lines (125, 127, 129) connecting the coolant circuit (120) to the degassing system (119).

8. The system (2) of any of claims 5-7, wherein the degassing system (119) is a swirl pot.

9. The system (2) of any of claims 5-8, wherein the pressure equalization tank (110) is located vertically above the fuel cell system (112).

10. An electrically driven motor vehicle (1) comprising the system (2) according to any of claims 5-9.

## Patentansprüche

1. Druckausgleichstank (110) für ein Kühlmittelsystem (100) eines elektrisch angetriebenen Kraftfahrzeugs (1), umfassend:
- ein erstes Teilvolumen (110a), das mit Druckgas gefüllt ist,
- ein zweites Teilvolumen (110b), das mit einem Kühlmittel gefüllt ist,
- ein elektronisch gesteuertes Ventil (128), das so betrieben werden kann, dass es Druckgas aus dem Druckausgleichstank (110) ablässt, wenn der Kühlmitteldruck einen Schwellenwert überschreitet, **dadurch gekennzeichnet, dass** das elektronisch gesteuerte Ventil (128) ein Turboregelventil ist.

2. Druckausgleichstank (110) nach Anspruch 1, weiter umfassend einen Gasanschluss (113a) zum Aufnehmen von Druckgas, wobei der Gasanschluss (113a) zum ersten Teilvolumen (110a) öffnet.

3. Druckausgleichstank (110) nach einem der Ansprüche 1 bis 2, weiter umfassend einen Kühlmittelanschluss (113b) zum Versorgen des Kühlsystems (100) mit Kühlmittel, wobei der Kühlmittelanschluss (113b) zum zweiten Teilvolumen (110b) öffnet.

4. Druckausgleichstank (110) nach einem der Ansprüche 1 bis 3, weiter umfassend einen dichten Deckel (111), der an seiner Oberseite angeordnet ist.

5. System (2) für ein elektrisch angetriebenes Kraftfahrzeug (1), umfassend ein Brennstoffzellensystem (112) und ein Kühlsystem (100), umfassend:
- einen ersten Kühler (116),
- einen Kühlmittelkreislauf (120) zum Mitführen eines Kühlmittels zwischen dem Brennstoffzellensystem (112) und dem ersten Kühler (116),
- ein mit dem Kühlmittelkreislauf (120) gekoppeltes Entgasungssystem (119), wobei das Entgasungssystem (119) ausgelegt ist, um Gas aus dem Kühlmittel zu entfernen,
- einen Druckausgleichstank (110) nach einem der vorhergehenden Ansprüche, wobei der Druckausgleichstank (110) über eine Druckgasleitung (121) mit dem Brennstoffzellensystem (112) und über eine Kühlmittelleitung (123) mit dem Entgasungssystem (119) gekoppelt ist.

6. System (2) nach Anspruch 5, wobei das Kühlsystem (100) weiter einen zweiten Kühler (117) umfasst, wobei der Kühlmittelkreislauf (120) ein Kühlmittel zwischen dem Brennstoffzellensystem (112) und dem zweiten Kühler (117) mitführt.

7. System (2) nach Anspruch 6, weiter umfassend Entlüftungsleitungen (125, 127, 129) zum Verbinden des Kühlmittelkreislaufs (120) mit dem Entgasungssystem (119).

8. System (2) nach einem der Ansprüche 5 bis 7, wobei das Entgasungssystem (119) ein Umwälzbehälter ist.

9. System (2) nach einem der Ansprüche 5 bis 8, wobei der Druckausgleichstank (110) vertikal über dem Brennstoffzellensystem (112) angeordnet ist.

10. Elektrisch angetriebenes Kraftfahrzeug (1), umfassend das System (2) nach einem der Ansprüche 5 bis 9.

## Revendications

1. Réservoir d'égalisation de pression (110) pour un système de refroidissement (100) d'un véhicule automobile à propulsion électrique (1), comprenant :
- un premier volume partiel (110a) rempli de gaz sous pression,
- un second volume partiel (110b) rempli d'un liquide de refroidissement,
- une soupape à commande électronique (128) pouvant fonctionner pour libérer le gaz sous pression du réservoir d'égalisation de pression (110) lorsque la pression de liquide de refroidissement dépasse une valeur seuil,
**caractérisé en ce que** la soupape à commande électronique (128) est une soupape de commande turbo.

2. Réservoir d'égalisation de pression (110) selon la revendication 1, comprenant en outre un orifice de gaz (113a) pour recevoir du gaz sous pression, l'orifice de gaz (113a) s'ouvrant sur le premier volume partiel (110a).

3. Réservoir d'égalisation de pression (110) selon l'une des revendications 1 et 2, comprenant en outre un orifice de liquide de refroidissement (113b) pour fournir du liquide de refroidissement au système de refroidissement (100), l'orifice de liquide de refroidissement (113b) s'ouvrant sur le second volume partiel (110b).

4. Réservoir d'égalisation de pression (110) selon l'une des revendications 1 à 3, comprenant en outre un capuchon étanche (111) agencé au niveau de son côté supérieur.

5. Système (2) pour un véhicule automobile à propulsion électrique (1), comprenant un système de pile à combustible (112) et un système de refroidissement (100) comprenant :
- un premier radiateur (116),
- un circuit de refroidissement (120) pour transporter un liquide de refroidissement entre le système de pile à combustible (112) et le premier radiateur (116),
- un système de dégazage (119) couplé au circuit de refroidissement (120), le système de dégazage (119) étant adapté pour éliminer le gaz du liquide de refroidissement,
- un réservoir d'égalisation de pression (110) selon l'une des revendications précédentes, le réservoir d'égalisation de pression (110) étant couplé au système de pile à combustible (112) via une conduite de gaz sous pression (121) et au système de dégazage (119) via une conduite de liquide de refroidissement (123).

6. Système (2) selon la revendication 5, dans lequel le système de refroidissement (100) comprend en outre un second radiateur (117), le circuit de refroidissement (120) transportant un liquide de refroidissement entre le système de pile à combustible (112) et le second radiateur (117).

7. Système (2) selon la revendication 6, comprenant en outre des conduites de désaération (125, 127, 129) reliant le circuit de refroidissement (120) au système de dégazage (119).

8. Système (2) selon l'une des revendications 5 à 7, dans lequel le système de dégazage (119) est une cuve à effet tourbillonnaire.

9. Système (2) selon l'une des revendications 5 à 8, dans lequel le réservoir d'égalisation de pression (110) est situé verticalement au-dessus du système de pile à combustible (112).

10. Véhicule automobile à propulsion électrique (1) comprenant le système (2) selon l'une des revendications 5 à 9.
